Europäisches Patentamt

**European Patent Office**

Office européen des brevets

(11) Numéro de publication: **0 141 737**
**A1**

(12)

# DEMANDE DE BREVET EUROPEEN

(21) Numéro de dépôt: **84402176.6**

(51) Int. Cl.⁴: **G 01 K 5/04**

(22) Date de dépôt: **30.10.84**

(30) Priorité: **04.11.83 FR 8317521**

(71) Demandeur: **SCHERER PHILIPPE - SARL INNOVEX, 194Bis, Rue de la Marne, F-95610 Eragny-sur-Oise (FR)**

(43) Date de publication de la demande: **15.05.85**
**Bulletin 85/20**

(84) Etats contractants désignés: **BE DE GB IT**

(72) Inventeur: **Scherer, Patrick, 45, Rue de Beauvais, F-95420 Magny en Vexin (FR)**

(54) **Dispositif pour le maintien dans une position rigoureuse d'un tube capillaire sur un thermomètre.**

(57) L'invention concerne un dispositif pour le maintien dans une position rigoureuse d'un tube capillaire (5) sur un thermomètre, caractérisé en ce qu'il comporte un support thermométrique (1) avec un évidement (2) pour l'emplacement du capillaire (5) ouvert à ses deux extrémités dont l'une comporte une languette élastique de maintien et une butée (3, 3').

Le dispositif selon l'invention donne un positionnement précis du capillaire par le biais d'un montage sans main-d'oeuvre qualifiée. Ce dispositif est destiné à tous thermomètres d'intérieur, d'extérieur, de congélateur.....

Coupe AA.

- 1 -

0141737

L'usage du Thermomètre pour l'intérieur et l'extérieur à capillaire de verre contenant un liquide dilatable, fixé sur un support de toute matière, est largement répandu.

La fixation du tube (5) sur le support gradué (1) a toujours été une opération longue et coûteuse. En effet, le tube capillaire (5) peut être collé ou bien tenu par des petites attaches en métal qui entourent ce tube (5) et qui se replient en arrière du support (1).

Le défaut de ces montages est, qu'ils ne sont pas définitifs dans le temps, surtout s'ils ne sont pas faits avec la minutie nécessaire.

La présente invention a pour but de réaliser un encliquetage automatique et définitif du capillaire de verre (5), modèle standard à crochet de fixation.

Dans cette invention le support en matière plastique (1) en métal, bois ou en bois et métal, comporte un évidement (2) sur le devant de la plaque (1), ouvert à ses deux extrémités. Le tube (5) se glisse par l'arrière de cette plaque par l'une des ouvertures et vient se verrouiller sur une languette élastique (4) faisant ressort disposée à l'autre extrémité ouverte de cet évidement (2). Une butée (3) limite la sortie du tube (5) à son extrémité opposée au réservoir (6) disposant d'au moins une face aplatie et étant placé à plat contre le support empêchant la rotation du tube capillaire (5).

Le temps de montage se trouve ainsi considérablement amélioré, et ne nécessite pas de main-d'oeuvre très qualifiée.

On décrira plus en détails ci-après, à titre indicatif et nullement limitatif un mode particulier de réalisation du Thermomètre selon la présente invention, en référence aux dessins annexés.

La figure 1 est une vue en élévation de face du support (1) du tube capillaire en verre (5).

La figure 2 est une coupe dans le sens de la longueur selon AA de la figure 1 laissant apparaître le fond de l'extrémité de l'évidement (2) faisant ressort.

La figure 3 est une vue correspondant à la figure 2 après mise en place définitive du capillaire en verre (5) posé dans l'encliquetage.

La figure 4 est une vue selon BB décrivant de façon explicite la forme de l'évidement (2) de la plaque (1).

La figure 5 est une vue en coupe selon CC de la figure 1 et laissant apparaître le ressort de verrouillage.

La figure 6 est une vue en coupe selon AA de la figure 1 du dispositif selon une variante de réalisation.

Le montage consiste à faire entrer le tube capillaire (5) avec son crochet (7) en avant par l'extrémité libre en bas (8) suivant la flèche, de l'évidement (2) au dos du support (1).

Après avoir fait pénétrer le crochet (7) du tube (5), il suffit, en poussant le capillaire (5) par la boule (6), de placer celui-ci exactement dans l'évidement (2) existant sur la plaquette thermométrique (1).

On arrive alors en butée dans le haut de cet évidement (2).

En exerçant une poussée sur le haut du capillaire (5) pour bien l'appliquer dans le fond de son logement (2) le crochet (7) du capillaire (5) enfonce légèrement cette languette (4) et se place, à l'arrière du support thermométrique (1) entre l'extrémité de celle-ci et la butée (3).

Ayant donné de la souplesse à la languette (4) le haut du capillaire (5) avec son crochet (7) peut s'enfiler de quelques millimètres sous la partie arrière (9) de la plaquette thermométrique (1).

En continuant à pousser le capillaire (5) par le réservoir (6) le tube (5) vient se glisser définitivement, la languette souple (4) appliquant alors le capillaire contre la partie arrière (9) du support (1). La butée (3) ou (3') empêchant le capillaire (5) de monter plus haut.

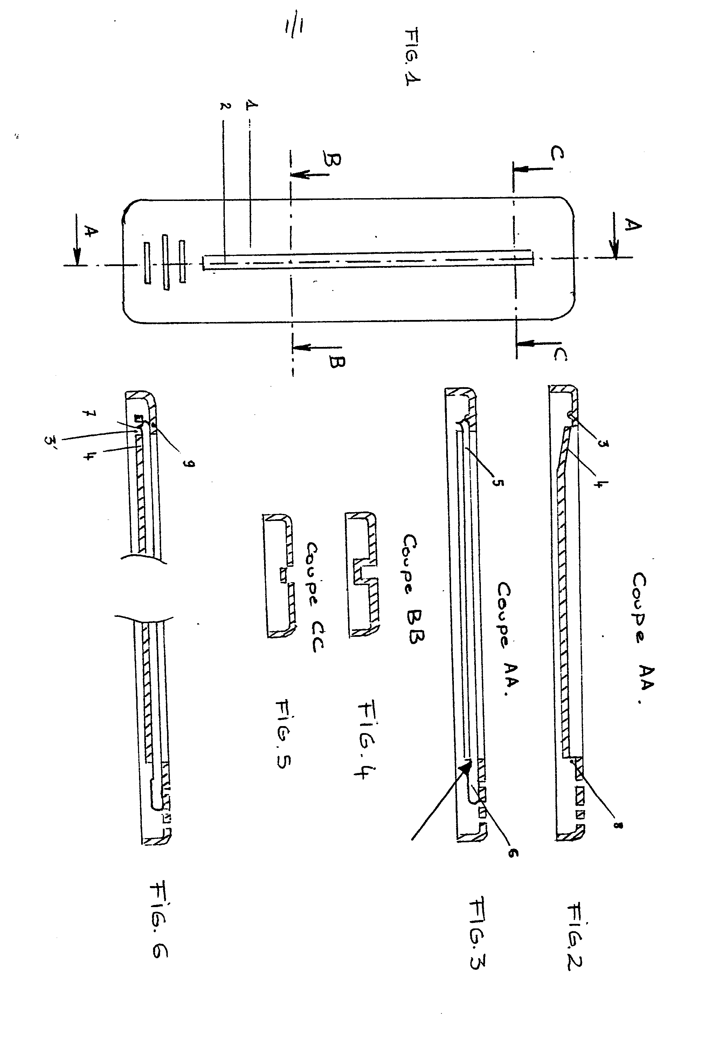

Cette butée étant soit disposée en relief (3) sur la partie arrière du support (1) et illustrée en figure 3 où la languette (4) est courte; soit disposée (3') sous forme d'un orifice légèrement plus grand que la section du crochet (7) dans la partie de la languette qui est longue et prolongée dans ce cas sous la partie arrière du support comme illustré en figure 6.

Dans cette variante lors du montage le crochet (7) du capillaire (5) enfonce légèrement la languette (4) qui fait ressort la pointe du crochet (7) vient se placer dans le trou de cette languette (4) coinçant ainsi le capillaire (5).

- 4 -

0141737

### REVENDICATIONS

1) Dispositif pour le maintien dans une posotion rigoureuse d'un tube capillaire (5) sur un thermomètre, caractérisé en ce qu'il comporte un support thermométrique (1) avec un évidement (2) pour l'emplacement du capillaire (5) ouvert à ses deux extrémités dont l'une comporte une languette élastique de maintien et une butée (3, 3').

2) Dispositif selon la revendication 1 caractérisé en ce que la languette (4) constituant le fond de l'évidement (2) est courte et en ce que la butée est disposée en relief sous la face arrière du support (1).

3) Dispositif selon la revendication 1 caractérisé en ce que la languette (4) constituant le fond de l'évidement (2) est langue et comporte un trou légèrement plus grand que la section du crochet (7) du capillaire (5).

0141737

FIG. 1

Coupe AA.

FIG.2

Coupe AA.

FIG.3

Coupe BB

FIG.4

Coupe CC

FIG.5

FIG. 6

Office européen
des brevets

**RAPPORT DE RECHERCHE EUROPEENNE**

0141737
Numéro de la demande

EP 84 40 2176

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 514 895 (SCHERER)<br>* Figures 1,4; revendications 1,9 * | 1,3 | G 01 K 5/04 |
| A | FR-A-2 517 426 (BERTHOUD)<br>* Figure 1; revendication 1 * | 1 | |

DOMAINES TECHNIQUES
RECHERCHES (Int. Cl.4)

G 01 K

Le présent rapport de recherche a été établi pour toutes les revendications

| Lieu de la recherche | Date d'achèvement de la recherche | Examinateur |
|---|---|---|
| LA HAYE | 03-01-1985 | KOLBE W.H. |